# EUROPEAN PATENT APPLICATION

(11) **EP 1 767 816 A1**
(43) Date of publication of application: **28.03.2007**
(21) Application number: 05765114.3
(22) Date of filing: 27.06.2005
(51) Int. Cl.: F16H 9/18

(54) **BELT TYPE CONTINUOUSLY VARIABLE TRANSMISSION FOR SADDLE-RIDING TYPE VEHICLE AND SADDLE-RIDING TYPE VEHICLE**

(30) Priority: 28.06.2004 JP 2004190228
(71) Applicant: YAMAHA HATSUDOKI KABUSHIKI KAISHA, Iwata-shi, Shizuoka 438-8501 (JP)
(72) Inventor: UNNO, Toshio, YAMAHA HATSUDOKI KABUSHIKI KAISHA, Iwata-shi, Shizuoka, 4388501 (JP); TAKEBE, M., c/o YAMAHA HATSUDOKI KABUSHIKI KAISHA, Iwata-shi, Shizuoka, 4388501 (JP)
(74) Representative: Grünecker, Kinkeldey, Stockmair & Schwanhäusser Anwaltssozietät
(86) International application number: PCT/JP2005/011711
(87) International publication number: WO 2006/001410

(57) **Abstract**

[Problem to be Solved] To provide a belt continuously variable transmission for a straddle type vehicle that provides better shift response without the need of increasing the size of an electric motor.

[Solution] A primary sheave 10 and a secondary sheave 11 are each composed of a fixed flange 10A, 11A and a movable flange 10B, 11B. The groove width of the primary sheave 10 is made to change by an electric motor moving the movable flange 10B of the primary sheave 10, and the movable flange 11B of the secondary sheave 11 is urged in the direction to narrow the groove width thereof by a spring 13. The respective movable flanges 10B, 11B of the primary sheave 10 and the secondary sheave 11 are further provided with torque cam assemblies 14, 15 for applying thrusts in the axial directions of the movable flanges 10B, 11B in response to differences in torque between the fixed flanges 10A, 11A and the movable flanges 10B, 11B.

## Description

### Field of the Invention

The present invention relates to a belt continuously variable transmission for a straddle type vehicle having a belt received in V-grooves of a primary sheave and a secondary sheave and adapted to control a speed change ratio steplessly, and to a straddle type vehicle.

### Background Art

V-belt continuously variable transmissions are used widely on straddle type vehicles such as scooter type motorcycles. The V-belt continuously variable transmissions include a primary shaft to which an output from a power source such as an engine is input; a secondary shaft for taking the output and directing it to a drive wheel; and a pair of primary sheave and secondary sheave respectively disposed on the primary shaft and the secondary shaft for making variable the groove widths of the sheaves. A V-belt is wound around both the sheaves, and a groove-width change mechanism is used to change the groove widths of the sheaves to change the V-belt receiving diameters, thereby changing the speed change ratio of the primary sheave to the secondary sheave steplessly.

Each of the primary sheave and the secondary sheave is usually composed of a fixed flange and a moving flange defining a V-groove therebetween, and one of the moving flanges is disposed in a manner to move along the axis of the primary shaft and the other moving flange is disposed in a manner to move along the axis of the secondary shaft. The moving flanges are to be moved by the groove-width change mechanism, thereby changing the speed change ratio steplessly.

Some conventional V-belt continuously variable transmissions of this type use an electric motor to move the moving flange of the primary sheave so as to change the groove width thereof. The moving thrust from the electric motor permits the movement of the movable flange either in the direction to narrow the groove width of the primary sheave (toward TOP) or in the direction to widen the groove width thereof (toward LOW), making it possible to change the groove width optimally (see Patent Document 1).
Patent Document 1
   JP-B-3043061
Patent Document 2
   JP-B-Hei 7-86383
Patent Document 3
   JP-A-Hei 4-157242

### Disclosure of the Invention

### Problem to be Solved by the Invention

Meanwhile, in the power transmission from the primary sheave to the secondary sheave via the belt, an axial thrust is essential for preventing a belt slip. It is possible to obtain the axial thrust for preventing a belt slip by disposing a compression spring at the movable flange of the secondary sheave so as to always urge the movable flange toward the fixed flange. However, a predetermined thrust produced by the secondary spring in response to running states such as acceleration and deceleration, where the belt slip is most likely to occur, may overload the belt in a normal state, resulting in the wear of components including the belt.

Further, the axial thrust produced by the secondary spring is applied only in the direction to narrow the groove width of the secondary sheave, namely, in the direction to increase the winding diameter of the secondary sheave. Thus, when the speed change ratio is shifted toward LOW, the axial thrust serves to assist the output of torque from the electric motor, whereas when the speed change ratio is shifted toward TOP, the movable flange of the primary sheave needs to be moved in the direction to decrease the winding diameter of the secondary sheave (in the direction to increase the winding diameter of the primary sheave) against the urging force of the secondary spring. The electric motor, therefore, is expected to have large output torque correspondingly, which does not contribute to a size reduction of the motor.

In view of the foregoing problem, it is, therefore, an object of the present invention to provide a belt continuously variable transmission for a straddle type vehicle that provides an axial thrust essential for preventing a belt slip and provides better shift response without the need of increasing the size of an electric motor.

### Means for Solving the Problem

The present invention is directed to a belt continuously variable transmission for a straddle type vehicle, comprising a belt received in V-grooves of a primary sheave and a secondary sheave, and adapted to change the groove widths of the sheaves, to thereby control a speed change ratio steplessly, in which the primary sheave and the secondary sheave are each composed of a fixed flange and a movable flange respectively mounted on rotary shafts, in which the groove width of the primary sheave is made to change by an electric motor moving the movable flange of the primary sheave, and the movable flange of the secondary sheave is urged in the direction to narrow the groove width thereof by a spring, and the continuously variable transmission further including: a primary-side actuation mechanism for applying a thrust axially of the movable flange of the primary sheave, when there occurs a difference in torque between the rotary shaft of the primary sheave and the movable flange of the primary sheave, in response to the difference in torque; and a secondary-side actuation mechanism for applying a thrust axially of the movable flange of the secondary sheave, when there occurs a difference in torque between the rotary shaft of the secondary sheave and the movable flange of the secondary sheave, in response to the difference in torque.

In a preferred embodiment, the primary-side actuation mechanism is disposed between the rotary shaft of the primary sheave and the movable flange of the primary sheave, and the secondary-side actuation mechanism is disposed between the rotary shaft of the secondary sheave and the movable flange of the secondary sheave.

In a preferred embodiment, at least one of the primary-side actuation mechanism and the secondary-side actuation mechanism comprises a cam groove that is formed on the movable flange side, and a guide pin that is formed on the rotary shaft side and slidably fitted in the cam groove.

In a preferred embodiment, during acceleration of the straddle type vehicle, the movable flange of the primary sheave is subjected to a thrust in the direction to narrow the groove width of the primary sheave from the primary-side actuation mechanism.

In a preferred embodiment, during rider's kick-down operation of the straddle type vehicle, the movable flange of the secondary sheave is subj ected to a thrust in the direction to narrow the groove width of the secondary sheave from the secondary-side actuation mechanism.

In a preferred embodiment, when a torque of the rotary shaft of the primary sheave is larger than a torque of the movable flange of the primary sheave, the movable flange of the primary sheave is subjected to a thrust in the direction to narrow the groove width of the primary sheave from the primary-side actuation mechanism.

In a preferred embodiment, when a torque of the rotary shaft of the secondary sheave is larger than a torque of the movable flange of the secondary sheave, the movable flange of the secondary sheave is subjected to a thrust in the direction to narrow the groove width of the secondary sheave from the secondary-side actuation mechanism.

In a preferred embodiment, a groove angle of the cam groove of at least one of the primary-side actuation mechanism and the secondary-side actuation mechanism is made in a manner to apply a thrust depending on shift ranges.

The present invention is directed to a straddle type vehicle incorporating the belt continuously variable transmission constructed as described above.

### Effect of the Invention

In a belt continuously variable transmission for a straddle type vehicle according to the present invention, the respective movable flanges of a primary sheave and a secondary sheave are provided with primary-side and secondary-side actuation mechanisms (e.g., torque cam assemblies) for applying thrusts in the axial directions of the movable flanges in response to differences in torque between the rotary shafts and the movable flanges. Thus, when the movable flange of the primary sheave is moved either in the direction to narrow the V-groove of the primary sheave (toward TOP) or in the direction to widen the V-groove thereof (toward LOW) by an electric motor, thrusts from the actuation mechanisms on the respective sheaves can be used to assist the output of torque from the electric motor, while serving as axial thrusts essential for preventing a belt slip. It is thus possible to provide better shift response without the need of increasing the size of the electric motor.

Especially when engine output is increased to shift toward TOP (e.g. during acceleration for passing), a difference in torque between the rotary shaft of the primary sheave and the movable flange of the primary sheave increases. At this time, a large thrust is to be applied to the movable flange in the direction to narrow the groove width of the primary sheave (toward TOP). It is thus possible to provide better shift response without the need of increasing the output of the electric motor.

When an accelerator is rapidly operated to a full throttle position to shift toward LOW (e.g., during rider's kick-down operation), a difference in torque between the movable flange of the secondary sheave and the rotary shaft of the secondary sheave increases due to the tension of the V-belt. At this time, a large thrust is to be applied to the movable flange in the direction to narrow the groove width of the secondary sheave (toward LOW). It is thus possible to provide better shift response without the need of increasing the output of the electric motor.

Further, the groove angle of the torque cam assembly is made in a manner to apply a thrust depending on shift ranges. This makes it possible to obtain an optimal thrust from the torque cam assemblies in each shift range.

### Brief Description of Drawings

FIG. 1 is a schematic view of the basic construction of a belt continuously variable transmission for a straddle type vehicle according to the present invention.
FIG. 2 illustrates an example of the construction of a torque cam assembly (actuation mechanism) according to the present invention.
FIG. 3 illustrates an example in which thrusts from the actuation mechanisms according to the present invention are used to assist the output torque from an electric motor.
FIG. 4 illustrates the amount of thrusts from the torque cam assemblies, provided on a primary sheave and a secondary sheave, in response to running states according to the present invention.
FIG. 5 is a horizontal sectional view of a V-belt continuously variable transmission for a small vehicle in accordance with an embodiment of the present invention.
FIG. 6 is an enlarged sectional view of the structure on the primary side of the V-belt continuously variable transmission for a small vehicle shown in FIG. 5.
FIG. 7 is an enlarged sectional view of the structure on the secondary side of the V-belt continuously variable transmission for a small vehicle shown in FIG. 5.
FIG. 8 is an enlarged sectional view illustrating a variation of a primary-side actuation mechanism shown in FIG. 6.
FIG. 9 is an enlarged sectional view illustrating another variation of the primary-side actuation mechanism shown in FIG. 6.
FIG. 10 illustrates a scooter type motorcycle incorporating the belt type continuously variable transmission according to the present invention.

### Description of Reference Numerals and Symbols

- 1,210:: belt continuously variable transmission
- 10,103:: primary sheave
- 11,104:: secondary sheave
- 10A, 11A, 103A, 104A:: fixed flange
- 10B, 11B, 103B, 104B:: movable flange
- 12, 105:: belt
- 13, 140:: spring (compression coil spring)
- 14, 130:: primary-side actuation mechanism (torque cam assembly)
- 15, 160:: primary-side actuation mechanism (torque cam assembly)
- 16, 101:: primary shaft
- 17, 102:: secondary shaft
- 18,131,161:: cam groove
- 19,132,162:: guide pin
- 107:: groove-width change mechanism
- 110:: motor
- 205:: engine (power source)
- 400:: scooter type motorcycle

### Best Mode for Carrying Out the Invention

As described above, in the V-belt continuously variable transmission, shifting toward TOP is achieved as the groove width of the primary sheave is narrowed and the groove width of the secondary sheave is widened; shifting toward LOW is achieved as the groove width of the primary sheave is widened and the groove width of the secondary sheave is narrowed. The groove widths of the primary sheave and the secondary sheave are to be controlled by the electric motor moving the movable flange of the primary sheave.

The sheaves are composed of the fixed flanges that are secured to the primary shaft and the secondary shaft, and the movable flanges adapted to move along the axes of rotation of the fixed flanges. The movable flanges are made to rotate, as the fixed flanges rotate, under the tension of the V-belt wound around the sheaves.

If the V-belt slips off the moving sheaves, the power transmitted from the primary sheave to the secondary sheave may decrease. Especially during acceleration for passing or during rider's kick-down operation, the V-belt will slip off the moving sheave due to high shift speed. In addition, during acceleration for passing or rider's kick-down operation, especially good shift response is expected in the running states of the vehicle.

In view of the above points, after the consideration of the method of obtaining a thrust for assisting the output of torque from the electric motor such that an axial thrust larger than that required in the normal state for preventing a belt slip is provided only when the slippage of the V-belt off the moving sheaves is most likely to occur, while providing better response, the present inventor was able to conceive the present invention.

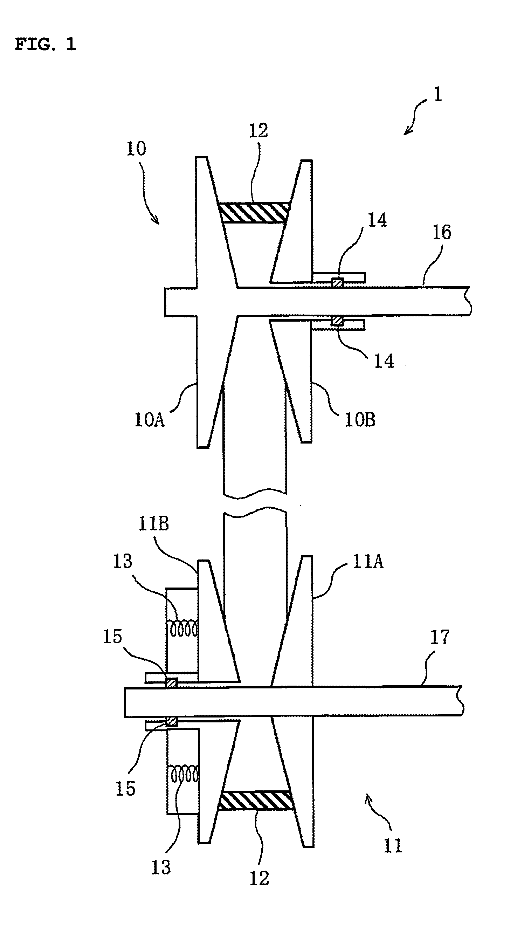

Description will now be made of a belt continuously variable transmission for a straddle type vehicle in accordance with an embodiment of the present invention with reference to FIGs. 1 through 3. It should be understood that the present invention is not limited to the disclosed embodiment.

FIG. 1 is a schematic view of the basic construction of a belt continuously variable transmission 1 for a straddle type vehicle in accordance with this embodiment, in which a belt 12 is received in V-grooves of a primary sheave 10 and a secondary sheave 11, and the groove widths of the sheaves are changed to thereby control a speed change ratio steplessly.

The primary sheave 10 and the secondary sheave 11 are composed of fixed flanges 10A, 11A and movable flanges 10B, 11B both mounted on rotary shafts. The groove width of the primary sheave 10 is made to change by an electric motor (not shown) moving the movable flange 10B of the primary sheave 10, and the movable flange 11B of the secondary sheave 11 is urged in the direction to narrow the groove width thereof by a spring 13.

The fixed flange 10A of the primary sheave 10 is coupled to a primary shaft 16 to which an output from a power source such as an engine is input. The fixed flange 11A of the secondary sheave 11 is coupled to a secondary shaft 17 for taking the output and directing it to a drive wheel.

In a part of the respective movable flanges 10B, 11B of the primary sheave 10 and the secondary sheave 11, there are further provided a primary-side actuation mechanism 14 and a secondary-side actuation mechanism 15 for applying thrusts in the axial directions of the movable flanges 10B, 11B in response to differences in torque between the fixed flanges 10A, 11A and the movable flanges 10B, 11B.

The actuation mechanisms 14, 15 are each constructed of a torque cam assembly for example, which is composed of a cam groove formed on the movable flange side, and a guide pin formed on the rotary shaft side and slidably fitted in the cam groove. It should be noted, however, that the actuation mechanisms 14, 15 can be embodied in any forms if they are joined to the movable flanges or the rotary shafts so as to apply the required thrust.

It should be noted that the torques of the movable flanges 10B, 11B refer to engine torque or the load torque of the rear wheel that is to be transmitted to the movable flanges 10B, 11B via the belt 12 (the belt 12 is subjected to a thrust from the spring 13 so as to prevent a belt slip), wound around the primary sheave 10 and the secondary sheave 11, in response to the running states of the vehicle.

In the belt continuously variable transmission 1 constructed as above, the respective movable flanges 10B, 11B of the primary sheave 10 and the secondary sheave 11 are provided with the primary-side actuation mechanism 14 and the secondary-side actuation mechanism 15 for applying thrusts in the axial directions of the movable flanges 10B, 11B in response to differences in torque between the fixed flanges 10A, 11A and the movable flanges 10B, 11B. Thus, thrusts from the actuation mechanisms 14, 15 provided on the respective sheaves can be used to assist the output of torque from the electric motor, when the movable flange 10B is moved either in the direction to narrow the V-groove of the primary sheave 10 (toward TOP) or in the direction to widen the V-groove thereof (toward LOW) by the electric motor. It is also possible to provide axial thrusts for preventing a belt slip and to provide better shift response without the need of increasing the size of the electric motor.

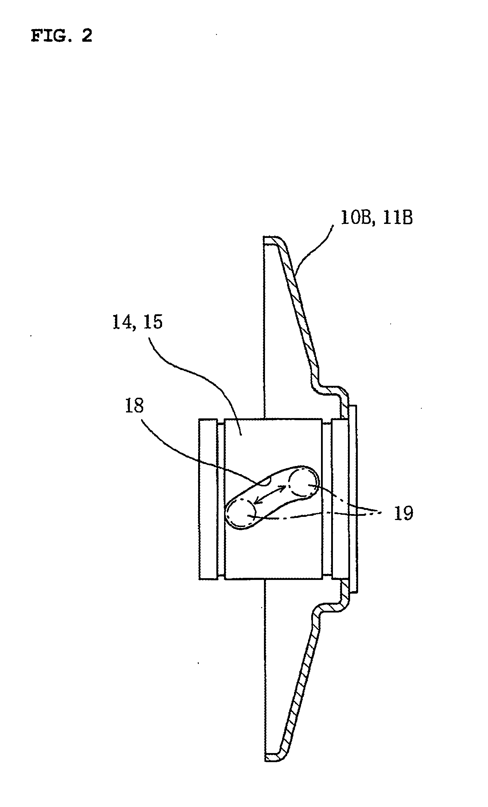

FIG. 2 illustrates an example of the construction of a torque cam assembly used as the actuation mechanism 14, 15. A cam groove 131 extending at an angle relative to the axial direction of the movable flange 10B, 11B is formed in a portion joined to the movable flange 10B, 11B. The cam groove 18 receives a slidable guide pin 19 that is formed with the rotary shaft 16, 17 into one body. When a difference in torque is caused between the rotary shaft 16, 17 and the movable flange 10B, 11B, the guide pin 19 is pressed by the wall of the cam groove 18, so that a thrust is applied to the movable flange 10B, 11B axially thereof.

It should be noted that changing the groove angle of the cam groove 18 can change the axial component of torque produced due to a difference in torque between the fixed flange 10A, 11A and the movable flange 10B, 11B, making it possible to vary a thrust to be applied axially of the movable flange 10B, 11B, for example depending on shift ranges.

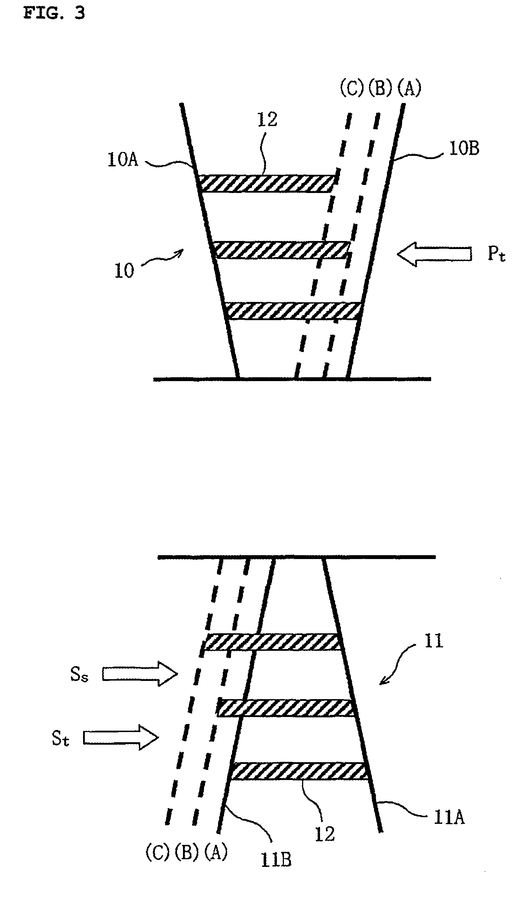

Description will now be given, with reference to FIG. 3, to an example in which in the belt continuously variable transmission 1 in accordance with this embodiment, thrusts from the actuation mechanisms 14, 15 are used to assist the output of torque from the electric motor when the movable flange 10B of the primary sheave 10 is moved by the electric motor so as to change the speed change ratio.

When engine output is increased to shift toward TOP (e.g., during acceleration for passing), the movable flange 10B of the primary sheave 10 is moved in the direction to narrow the groove width of the primary sheave 10, for example in the direction of (A) to (B) or (B) to (C), by the torque output from the electric motor. At this time, the movable flange 11B of the secondary sheave 11 is made to move in the direction to widen the groove width of the secondary sheave 11. In this case, the primary shaft is driven by the driving torque larger than the load torque of the drive wheel, causing the primary sheave to pull the belt subjected to the load of the drive wheel; namely, as the output from the engine increases, the torque of the rotary shaft 16 of the primary sheave 10, or the output shaft of the engine, increases, resulting in an increase in the difference in torque between the rotary shaft 16 and the movable flange 10B of the primary sheave 10.

As a result, a large thrust Pt is applied to the movable flange 10B in the direction to narrow the groove width of the primary sheave 10 (toward TOP) so as to assist the movement of the movable flange 10B by the electric motor. This makes it possible to provide better shift response without the need of increasing the torque output from the electric motor.

On the other hand, when an accelerator is rapidly operated to a full throttle position to shift toward LOW (e.g., during rider's kick-down operation), the movable flange 10B of the primary sheave 10 is moved in the direction to widen the groove width of the primary sheave 10, for example in the direction of (C) to (B) or (B) to (A), by the torque output from the electric motor. At this time, the movable flange 11B of the secondary sheave 11 is made to move in the direction to widen the groove width of the secondary sheave 11. In this case, the load torque of the drive wheel becomes larger than the belt driving torque; namely, rider' s accelerator operation increases the output from the engine, and the torque of the output of the engine is transmitted from the primary sheave to the movable flange of the secondary sheave via the belt, resulting in an increase in the torque of the movable flange of the secondary sheave. This causes an increase in the difference in torque between the movable flange 11B and the fixed flange 11A of the secondary sheave 11.

As a result, a large thrust St is applied to the movable flange in the direction to narrow the groove width of the secondary sheave 11 (toward LOW) so as to assist the movement of the movable flange 11B by the electric motor. This makes it possible to provide better shift response without the need of increasing the torque output from the electric motor.

It should be noted that in this case, the movable flange 11B is subjected to an urging force Ss of the spring 13 in the direction to narrow the groove width of the secondary sheave 11, and this urging force also serves to assist the movement of the movable flange 11B by the electric motor.

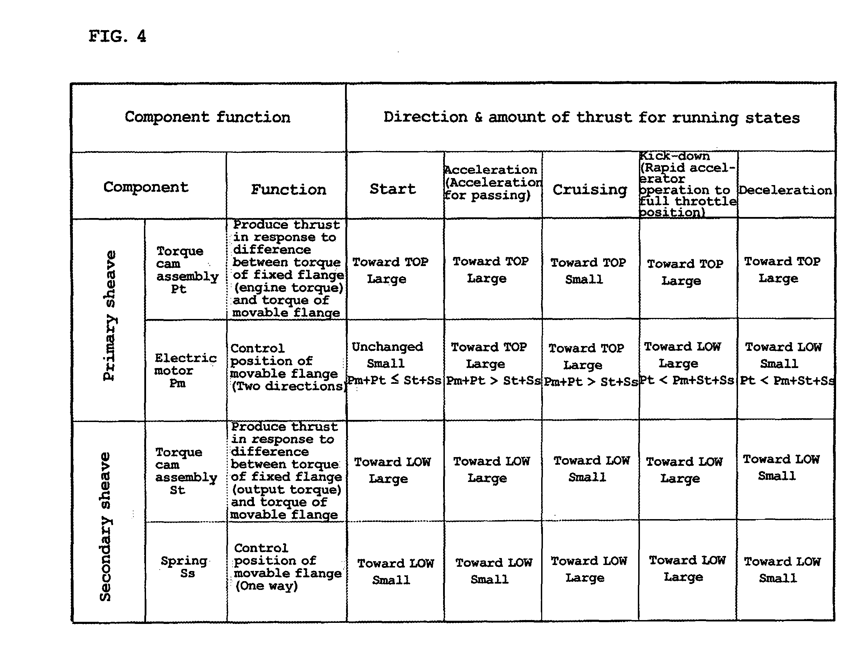

The above description illustrates the representative example in which the primary-side actuation mechanism 14 and the secondary-side actuation mechanism 15 provided on the movable flanges 10B, 11B are used to assist the movement of the movable flange 10B by the electric motor. The amount of thrusts from the actuation mechanisms (torque cam assemblies) 14, 15 on the primary sheave 10 and the secondary sheave 11 in response to the running states of the vehicle is shown in FIG. 4. It should be noted that the table of FIG. 4 also shows, for the reason of comparison, the amount of thrust from the spring 13 provided on the secondary sheave 11.

As is apparent from this table, the electric motor is expected to produce an especially large thrust during acceleration (during acceleration for passing) and during rider's kick-down operation, when the thrusts Pt (toward TOP) and St (toward LOW) from the torque cam assemblies on the primary sheave and the secondary sheave work effectively to assist the output of torque Pm from the electric motor.

Also, an especially large thrust is needed for pressing the belt during acceleration (acceleration for passing) and during rider's kick-down operation, when the thrusts Pt (toward TOP) and St (toward LOW) from the torque cam assemblies on the primary sheave and the secondary sheave work effectively to press the belt, which is advantageous for the operation of the invention.

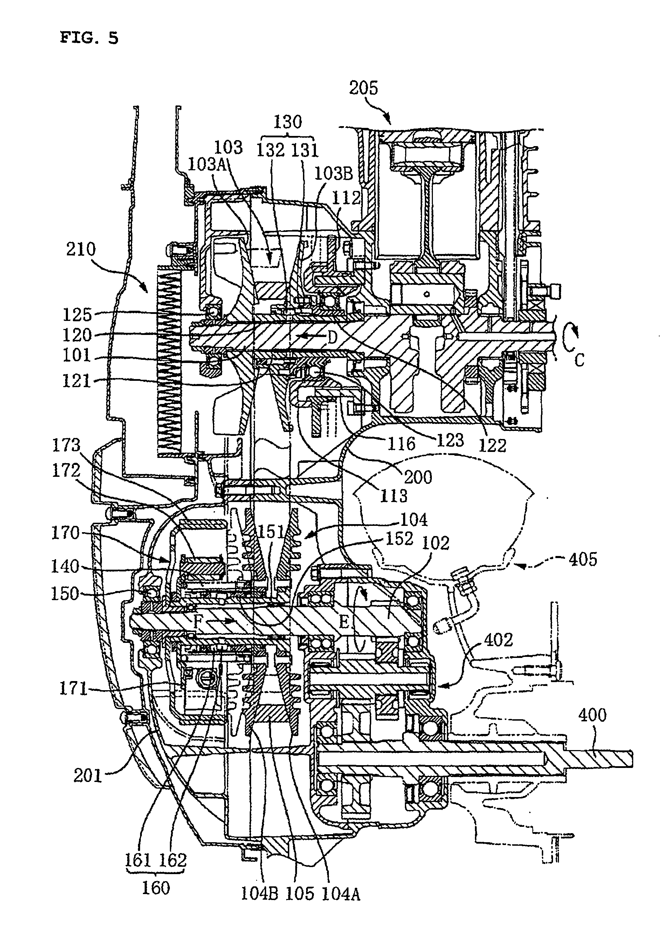

The above description has been given to the belt continuously variable transmission for a straddle type vehicle according to the present invention. The construction and operation of the belt continuously variable transmission will now be detailed with reference to FIGs. 5 through 9.

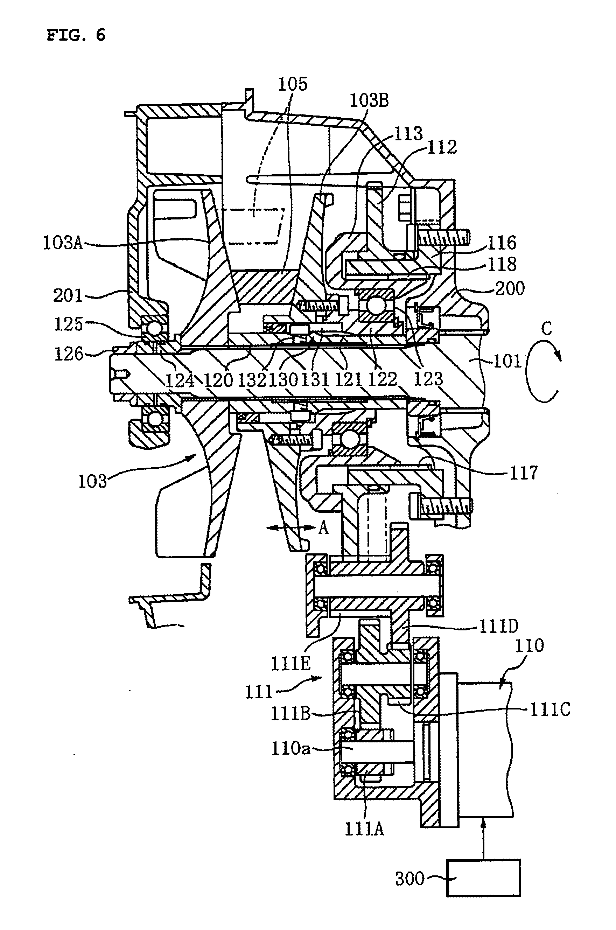

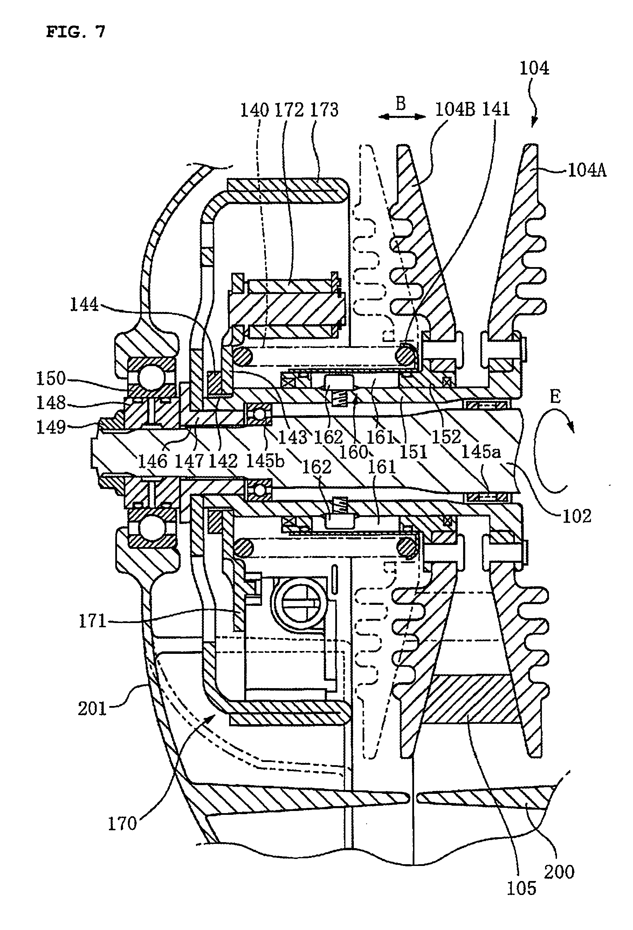

FIG. 5 is a horizontal sectional view of a V-belt continuously variable transmission for a motorcycle; FIG. 6 is an enlarged sectional view of the structure on the primary side of the V-belt continuously variable transmission shown in FIG. 5; and FIG. 7 is an enlarged sectional view of the structure on the secondary side of the V-belt continuously variable transmission shown in FIG. 5.

As shown in FIG. 5, a V-belt continuously variable transmission (hereinafter also referred to as "CVT") 210 for a motorcycle (small vehicle) includes a primary shaft 101 to which the output of an engine 205 as a power source is input; a secondary shaft 102 disposed parallel to the primary shaft 101 for taking the output and directing it to a drive wheel 405; and fixed flanges 103A, 104A and movable flanges 103B, 104B disposed on the primary shaft 101 and the secondary shaft 102 and defining belt-receiving V-grooves therebetween.

The CVT also includes a primary sheave 103 and a secondary sheave 104 for making the groove widths of the V-grooves variable with the axial (left and right direction in the figure) movement of the movable flanges 103B, 104B; a V-belt 105 received in the V-grooves of the primary sheave 103 and the secondary sheave 104 for power transmission between the sheaves 103, 104; and a groove-width change mechanism 107 for changing the groove widths of the primary sheave 103 and the secondary sheave 104 by moving the movable flanges 103B, 104B. The CVT is adapted to change the speed change ratio of the primary sheave 103 to the secondary sheave 104 steplessly using the groove-width change mechanism 107 to change the groove widths of the primary sheave 103 and the secondary sheave 104 so as to change the diameters on which the V-belt 105 is wound around the sheaves 103, 104.

The CVT 210 includes, as the groove-width change mechanism 107, a motor 110 (see FIG. 6) as means for applying a moving thrust to the movable flange 103B of the primary sheave 103; a primary-side actuation mechanism (specifically a torque cam assembly) 130 disposed between the movable flange 103B and the primary shaft 101 for applying a moving thrust to the movable flange 103B, when there occurs a difference in torque between the primary shaft 101 and the movable flange 103B, in the direction to cancel the difference in torque; a compression coil spring 140 as means for applying a thrust to the movable flange 104B of the secondary sheave 104 in the direction to narrow the groove width thereof; and a secondary-side actuation mechanism (specifically a torque cam assembly) 160 disposed between the movable flange 104B and the secondary shaft 102 for applying a moving thrust to the movable flange 104B, when there occurs a difference in torque between the secondary shaft 102 and the movable flange 104B, in the direction to cancel the difference in torque.

It should be noted that in FIG. 5, the arrows C and E indicate the rotational directions of the primary shaft 101 and the secondary shaft 102, respectively. The arrow D indicates the direction in which a thrust is to be applied to the movable flange 103B by the primary-side actuation mechanism 130, and the arrow F indicates the direction in which a thrust is to be applied to the movable flange 104B by the secondary-side actuation mechanism 160. The CVT 210 is housed in a space defined by transmission casing halves 200, 201 adjoining a crankcase of the engine 205, and the primary shaft 101 is formed with a crankshaft of the engine 205 into one body.

The secondary shaft 102 is connected to an axle 400 via a speed reducer 402, and the axle 400 has the drive wheel 405 attached thereto. The primary sheave 103 is disposed around the primary shaft 101, and the secondary sheave 104 is mounted around the secondary shaft 102 via a centrifugal clutch 170.

As shown in FIG. 6, the primary sheave 103 is composed of the fixed flange 103A secured to an end of the primary shaft (crankshaft) 101, and the movable flange 103B that is made movable axially of the primary shaft 101 (in the direction indicated by the arrow A in the figure). The V-groove to receive the V-belt 105 is defined between the opposed conical faces of the fixed flange 103A and the movable flange 103B. The end of the primary shaft 101 is supported by the casing half 201 via a bearing 125. A sleeve 124 that is mated with the bearing 125, and a sleeve 121 to be described below are secured to each other with a lock nut 126 so that the boss portion of the fixed flange 103A cannot move axially.

The movable flange 103B has a cylindrical boss portion through which the primary shaft 101 extends, and the boss portion has an end to which a cylindrical slider 122 is secured. Between the slider 122 and the primary shaft 101, the sleeve 121 is disposed. The sleeve 121 is fitted around the primary shaft 101 via splines 120 so as to rotate together with the primary shaft 101. The slider 122 is mounted around the sleeve 121 in a manner to slide axially.

The slider 122 has cam grooves 131 extending at an angle relative to the axial direction. Each cam groove 131 receives a slidable guide pin 132 projecting from the outer periphery of the sleeve 121. The movable flange 103B joined to the slider 122 is thus movable axially of the primary shaft 101, while rotating together with the primary shaft 101.

The cam groove 131 and the guide pin 132 construct the primary-side actuation mechanism 130 described above. The cam groove 131 thus inclines in the direction in which a moving thrust is to be applied to the movable flange 103B of the primary sheave 103, when there occurs a difference in torque between the primary shaft 101 and the movable flange 103B, in the direction to cancel the difference in torque (e.g., the direction in which a moving thrust is to be applied to the movable flange 103B, when the torque of the primary shaft 101 is larger than the torque of the movable flange 103B, in the direction to narrow the groove width of the primary sheave 103 (in the direction indicated by the arrow D)). The course as well as the inclination of the cam groove 131 can be linear, curved or the like depending on the possible characteristics of an applied moving thrust, so that improved machinability is provided.

A cylindrical feed guide 116 extending toward the movable flange 103B is screwed to the inner face of the casing half 200 at a position opposed to the movable flange 103B. The feed guide 116 is disposed coaxially around the primary shaft 101, and has an internal thread 117 formed on its inner peripheral face. A reciprocable gear 112 is fitted around the feed guide 116 in a manner to slide axially and circumferentially.

The reciprocable gear 112 is joined to an end of the outer peripheral wall of an annular rotary ring 113. The rotary ring has an inner peripheral wall connected to the outer peripheral wall so as to form a U-shaped cross section. The inner peripheral wall has an external thread 118 formed on its outer peripheral face, which is engaged with the internal thread 117 of the feed guide 116. The inner peripheral wall of the rotary ring 113 is coupled to the slider 122, which is joined to the movable flange 103B, via a bearing 123.

In this structure, as the reciprocable gear 112 is rotated, the reciprocable gear 112 and the rotary ring 113 are made to move axially due to lead feeding by the internal thread 117 and the external thread 118, causing the movable flange 103B joined to the slider 122 to move in a manner changing the groove width of the primary sheave 103. It should be noted that the external thread 118 and the internal thread 117 used are trapezoidal threads.

The motor 110 that serves to move the movable flange 103B of the primary sheave 103 is located at a position where it does not interfere with other parts. The motor output shaft 128a of the motor and the reciprocable gear 112 are coupled to each other via a multistage gear transmission mechanism 111 including spur gears 111A to 111E in combination.

The rotation of the motor 110 is controlled by a control unit 300 (see FIG. 6) to thereby cause the motor 110 to move the movable flange 103B axially via the reciprocable gear 112.

On the other hand, as shown in FIG. 7, the secondary sheave 104 is composed of the fixed flange 104A coupled to the secondary shaft 102 via the centrifugal clutch 170, and the movable flange 104B that is made movable axially of the secondary shaft 102 (in the direction indicated by the arrow B in the figure). The V-groove is defined between the opposed conical faces of the fixed flange 104A and the movable flange 104B to receive the V-belt 105.

The fixed flange 104A has a cylindrical guide 151, which is rotatably supported around the secondary shaft 102 via bearings 145a, 145b. The centrifugal clutch 170 disposed between the fixed flange 104A and the secondary shaft 102 includes a centrifugal plate 171 adapted to rotate together with the guide 151 of the fixed flange 104A; a centrifugal weight 172 supported by the centrifugal plate 171; and a clutch housing 173 with which the centrifugal weight 172 is brought into and out of contact.

The centrifugal plate 171 is coupled to the guide 151 of the fixed flange 104A via splines 142 and a lock member 144. The clutch housing 173 is secured to an end of the secondary shaft 102 via splines 146 and a boss member 147. It should be noted that the end of the secondary shaft 102 is supported by the casing half 201 via a bearing 150, and a sleeve 148 that is mated with the bearing 150 is secured to the clutch housing 173 and the boss member 147 with a lock nut 149 so that the clutch housing 173 and the boss member 147 cannot move axially.

In such structure, when a predetermined rotational speed of the centrifugal plate 171, which is adapted to rotate together with the fixed flange 104A, has been reached, the centrifugal weight 172 is forced outwardly by a centrifugal force into contact with the clutch housing 173, so that the rotation of the fixed flange 104A is transmitted to the secondary shaft 102.

The movable flange 104B is joined to a cylindrical slider 152 supported around the guide 151 of the fixed flange 104A so as to move axially, and is urged in the direction to narrow the groove width of its V-groove by a compression coil spring 140. The compression coil spring 140 is mounted on a spring holder 141 disposed around the slider 152, and is disposed between the spring holder 141 and a spring retainer 143 of the centrifugal plate 171 adapted to rotate together with the movable flange 104B.

The slider 152 joined to the movable flange 104B has cam grooves 161 extending at an angle relative to the axis of the slider. Each cam groove 161 receives a slidable guide pin 162 projecting from the outer periphery of the guide 151 joined to the movable flange 104A. The movable flange 104B joined to the slider 152 is thus movable axially of the secondary shaft 102, while rotating together with the secondary shaft 102.

The cam groove 161 and the guide pin 162 construct the secondary-side actuation mechanism 160 described above. The cam groove 161 thus inclines in the direction in which a moving thrust is to be applied to the movable flange 104B, when there occurs a difference in torque between the secondary shaft 102 and the movable flange 104B, in the direction to cancel the difference in torque (e.g., the direction in which a moving thrust is to be applied to the movable flange 104B, when the torque of the secondary shaft 102 is smaller than the torque of the movable flange 104B, in the direction to narrow the groove width of the secondary sheave 104 (the arrow F)). The course as well as the inclination of the cam groove 161 can be linear, curved or the like depending on the possible characteristics of an applied moving thrust, so that improved machinability is provided.

In the structure with the secondary-side actuation mechanism 160, as the rotational speed of the fixed flange 104A coupled to the secondary shaft 102 decreases, such as when the motorcycle is climbing up a slope, so that a difference is caused in rotational speed between the fixed flange 104A and the movable flange 104B, which is made to continuously rotate by the V-belt 105, the guide pin 162 will seem to press the wall of the cam groove 161 in the direction indicated by the arrow F, causing the movable flange 104B to move toward the fixed flange 104A via the slider 152 in a manner to narrow the groove width of the V-groove.

Description will now be given to the operation of the V-belt continuously variable transmission 210 for a motorcycle.

When a shift signal is input to the motor 110 from the control unit 300, the motor 110 is operated so as to cause the rotation of the reciprocable gear 112 and the rotary ring 113, which causes the axial movement of the slider 122 secured to the rotary ring 113 via the bearing 123 due to lead feeding by the external thread 118 and the internal thread 117, so that the movable flange 103B joined to the slider 122 moves in a manner to change the groove width of the primary sheave 103.

For example, as the groove width of the primary sheave 103 narrows, the diameter on which the belt 105 is wound around the primary sheave 103 increases, so that the speed change ratio will shift toward TOP. On the other hand, as the groove width of the primary sheave 103 widens, the diameter on which the belt 105 is wound around the primary sheave 103 decreases, so that the speed change ratio will shift toward LOW.

Meanwhile, the groove width of the secondary sheave 104 is made to change in an opposite manner to the primary sheave 103 with the change in the groove width of the primary sheave 103.

That is, as the diameter on which the V-belt 105 is wound around the primary sheave 103 decreases (shift toward LOW), the force that the V-belt 105 applies to the secondary sheave 104 decreases, so that the V-belt slips off the movable flange 104B, which causes a difference in rotational speed between the movable flange 104B and the fixed flange 104A. The movable flange 104B is then forced toward the fixed flange 104A through the operation of the cam groove 161 and by the urging force of the compression coil spring 140, so that the groove width of the secondary sheave 104 narrows and the diameter on which the V-belt 105 is wound around the secondary sheave 104 increases.

As a result, the speed change ratio of the primary sheave 103 to the secondary sheave 104 increases, effecting an increase in the torque to be transmitted to the drive wheel 405. On the other hand, as the diameter on which the V-belt 105 is wound around the primary sheave 103 increases (shift toward TOP), the V-belt 105 goes deeper into the V-groove of the secondary sheave 104, causing the movable flange 104B of the secondary sheave 104 to move away from the fixed flange 104A against the urging force of the compression coil spring 140. The groove width of the secondary sheave 104 thus widens and the diameter on which the V-belt 105 is wound around the secondary sheave 104 increases, so that the speed change ratio of the primary sheave 103 to the secondary sheave 104 decreases.

As such, the motor 110 is provided as the groove-width change mechanism 107 for changing the groove width of the primary sheave 103 as described above. Controlling the rotation of the motor 110 thus causes the movable flange 103B of the primary sheave 103 to move either in the direction to narrow the groove width thereof (toward TOP) or in the direction to widen the groove width thereof (toward LOW), thereby making it possible to change the position of the movable flange 103B to thereby change the groove width optimally.

When the motorcycle starts, a difference in torque between the primary shaft 101 and the movable flange 103B is large and a difference in torque between the secondary shaft 102 and the movable flange 104B is also large. At this time, the motor 110 should produce a minimum possible thrust to keep wide the groove width of the primary sheave 103 to maintain the reduction ratio toward LOW. Thus, the thrust from the motor 110 can be small, and shift speed can also be LOW.

When the motorcycle is accelerated or accelerated for passing, the groove width of the primary sheave 103 is expected to be narrowed to shift toward TOP. At this time, unlike when the groove width is widened, a large reaction force (thrusts from the compression coil spring 140 and the secondary-side actuation mechanism 160 in the direction to shift toward LOW) is applied to the primary sheave 103 by the secondary sheave 104 via the V-belt 105. Thus, a large thrust and a moderate shift speed are required so as to cause the movable flange 103B to move against the load from the secondary side.

In the groove-width change mechanism 107 of the CVT 210 in accordance with this embodiment, when the groove width of the primary sheave 103 is narrowed to shift toward TOP, the primary-side actuation mechanism 130 applies a moving thrust to the movable flange 103B of the primary sheave 103 in the direction to cancel a difference in torque as an assist force in the direction to narrow the groove width of the primary sheave (in the direction indicated by the arrow D), which offers a decrease in the required capacity of the motor 110.

That is, when engine speed is increased to shift toward TOP, since a large difference in torque is caused between the primary shaft 101 and the movable flange 103B, the primary-side actuation mechanism 130 applies a moving thrust to the movable flange 103B in response to the difference in torque in the direction to cancel the difference in torque.

Therefore, when the difference in torque between the primary shaft 101 and the movable flange 103B is larger, or when the more rapid shift toward TOP is expected, a larger moving thrust is applied to the movable flange 103B in the direction to narrow the groove width of the primary sheave, which makes it possible to save the output of the motor 110 without worsening shift response. Thus, the capacity of the motor 110 can be minimized, effecting a size reduction of the motor 110 correspondingly.

When the motorcycle is cruising, a difference in torque between the primary shaft 101 and the movable flange 103B, as well as a difference in torque between the secondary shaft 102 and the movable flange 104B is small. At this time, the motor 110 should produce a minimum possible thrust to keep the certain groove width of the primary sheave 103 to maintain the certain reduction ratio. Thus, the thrust from the motor 110 can be small, and shift speed can also be low.

Meanwhile, the movable flange 104B of the secondary sheave 104 of the CVT 210 is subjected to a thrust in the direction to narrow the groove width of the secondary sheave (toward LOW) from the compression coil spring 140 in advance, and a thrust in the direction to narrow the groove width of the secondary sheave in response to a difference in torque between the secondary shaft 102 and the movable flange 104B from the secondary-side actuation mechanism 160.

Thus, even when the load from the road surface has changed, resulting in an increase in engine speed, such as when a vehicle body made a jump while cruising, the change in load is controlled by the compression coil spring 140 and the secondary-side actuation mechanism 160 described above. This eliminates the need for the motor 110 to output a large thrust instantaneously to cancel the load, avoiding an increase in the size of the motor 110. In addition, the secondary sheave 104 is subjected to thrusts in the direction to narrow the groove width thereof (toward LOW) from the compression coil spring 140 and the secondary-side actuation mechanism 160 so that the V-belt 105 is prevented from slipping off the secondary sheave 104.

When the motorcycle widens the groove width of the primary sheave 103 to shift toward LOW in response to rider's kick-down operation, a difference in torque between the primary shaft 101 and the movable flange 103B is large and a difference in torque between the secondary shaft 102 and the movable flange 104B is also large. At this time, the motor 110 can move the movable flange 103B of the primary sheave 103 quickly in the direction to widen the groove width of the primary sheave (in the direction opposite to the direction indicated by the arrow D) using thrusts in the direction to narrow the groove width of the secondary sheave 104 from the compression coil spring 140 and the secondary-side actuation mechanism 160 in accordance with this embodiment.

Shift response can thus be enhanced, and specifically shift response during acceleration or rider's kick-down operation in response to a vehicle running load can be enhanced.

When the motorcycle is decelerated, a difference in torque between the primary shaft 101 and the movable flange 103B, as well as a difference in torque between the secondary shaft 102 and the movable flange 104B is small. When the motor 110 needs to apply a thrust in the direction to widen the groove width of the primary sheave 103, or in the direction to shift toward LOW, so as to obtain engine braking effect, the motor can use thrusts in the direction to narrow the groove width of the secondary sheave 104 from the compression coil spring 140 and the secondary-side actuation mechanism 160. Thus, the thrust from the motor can be small, and shift speed can also be low.

As such, the CVT 210 according to the present invention effects a size reduction of means for applying a moving thrust to the movable flange of the primary sheave and provides better shift response.

Meanwhile, the structure in which a torque cam assembly is provided on the primary sheave and/or the secondary sheave has been disclosed, for example in Patent Document 2 (JP-B-Hei 7-86383) and Patent Document 3 (JP-A-Hei 4-157242). The disclosed torque cam assembly, however, is provided for the purpose other than that intended by the present invention; therefore, the claimed invention could not be easily conceived by a person skilled in the art based on the description of Patent Document 2 or Patent Document 3.

More specifically, according to Patent Document 2, the torque cam assembly is provided on the secondary sheave to prevent a belt slip and not to assist the output of torque from the electric motor during shifting as disclosed in the claimed invention.

According to Patent Document 3, the primary sheave and the secondary sheave are respectively provided with the torque cam assemblies, which are designed to urge the respective sheaves in the directions to narrow the groove widths of the sheaves, namely, to apply urging forces against the forces to be applied in the directions to widen the groove widths of the sheaves from the V-belt and not to assist the output of torque from the electric motor during shifting as disclosed in the claimed invention. It should be noted that according to Patent Document 3, both the sheaves are coupled together with coupling bars so as to control the groove widths of the sheaves to thereby perform shifting, and therefore, the disclosed V-belt transmission is totally distinct in shifting mechanism from the V-belt continuously variable transmission intended by the present invention.

The constructions of the primary shaft, secondary shaft, primary sheave, secondary sheave, V-belt, groove-width change mechanism, primary-side actuation mechanism, spring, secondary-side actuation mechanism and the like of the V-belt continuously variable transmission for a motorcycle according to the present invention should not be interpreted as limited to those of the foregoing embodiment but may be implemented in various forms without departing from the spirit of the present invention.

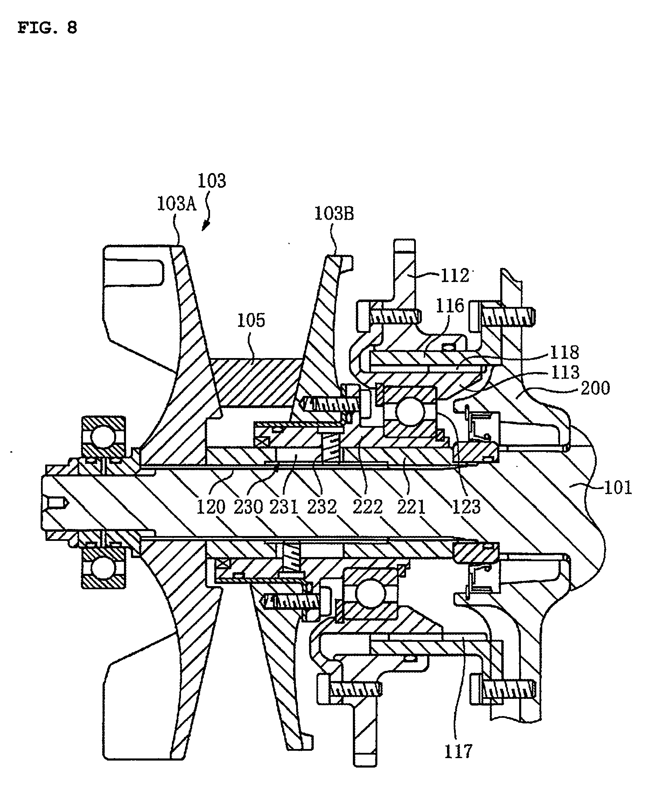

For example, in the foregoing embodiment, the cam grooves 131, 161 of the primary-side actuation mechanism 130 and the secondary-side actuation mechanism 160 are respectively provided on the members (sliders 122, 152) on the movable flange 103B, 104B side, and the guide pins 132, 162 are provided on the members (sleeve 121, guide 151) on the shaft side. However, as a primary-side actuation mechanism 230 shown in FIG. 8, a guide pin 232 may be provided on a member (slider 222) on the movable flange 103B side, so that a cam groove 231 may be provided on a member (sleeve 221) on the shaft side.

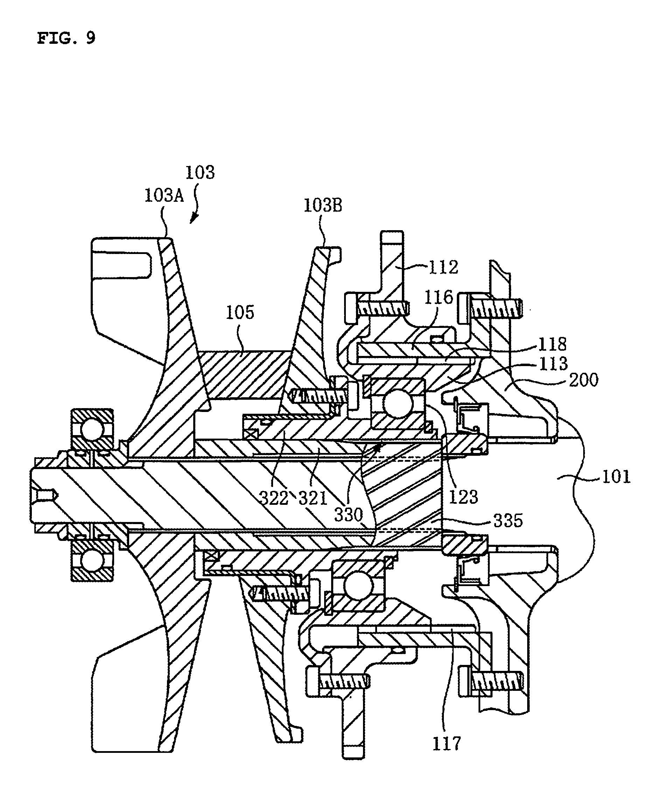

Further, in the foregoing embodiment, the primary-side actuation mechanism 130 and the secondary-side actuation mechanism 160 are composed of the cam grooves 131, 161 and the guide pins 132, 162, which has been discussed as exemplary. However, as a primary-side actuation mechanism 330 shown in FIG. 9, the actuation mechanism may be composed of spiral splines 135 that are formed between a sleeve 321 and a slider 322 with a helix angle relative to the axial direction. It should be mentioned that in the case of using the spiral splines 135, the sliding portion could have higher mechanical strength.

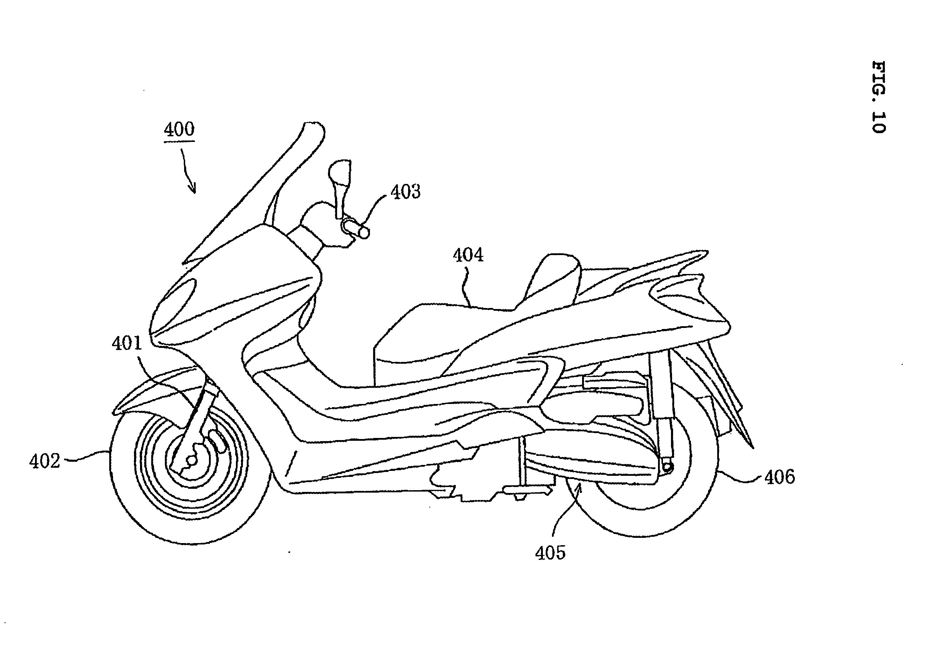

FIG. 10 illustrates an example of a scooter type motorcycle 400 incorporating the belt continuously variable transmission according to the present invention. As shown in FIG. 10, a front fork 401 is pivotally supported by a head pipe of a body frame. The lower end of the front fork 401 is provided with a front wheel 402, and the upper end of the front fork is provided with steering handlebars 403. A power unit 405 is mounted below a seat 404 in a manner to swing in the vertical direction, and includes the belt continuously variable transmission 1, 210 according to the present invention, the electric motor 110 for controlling the groove width of the primary sheave of the CVT, the engine 205 and the like. A rear wheel 406 is disposed at the rear end of the power unit 405.

It should also be understood that while in the foregoing embodiment, description has been made of the V-belt continuously variable transmission 1, 210 for a motorcycle, the V-belt continuously variable transmission according to the present invention is not limited to the motorcycle but can also be applied to small, relatively lightweight vehicles such as three-wheeled or four-wheeled buggies. When the present invention is to be applied to actual straddle-type vehicles, specific implementations should be examined from a comprehensive viewpoint which allows for each and every requirement in order to produce an excellent effect such as described above.

### Industrial Applicability

The present invention can provide a belt continuously variable transmission for a straddle type vehicle that provides an axial thrust essential for preventing a belt slip and provides better shift response without the need of increasing the size of an electric motor.

## Claims

1. A belt continuously variable transmission for a straddle type vehicle, comprising a belt received in V-grooves of a primary sheave and a secondary sheave, and adapted to change the groove widths of the sheaves, to thereby control a speed change ratio steplessly,
wherein the primary sheave and the secondary sheave are each composed of a fixed flange and a movable flange respectively mounted on rotary shafts,
wherein the groove width of the primary sheave is made to change by an electric motor moving the movable flange of the primary sheave, and the movable flange of the secondary sheave is urged in the direction to narrow the groove width thereof by a spring, and
the continuously variable transmission further comprising: a primary-side actuation mechanism for applying a thrust axially of the movable flange of the primary sheave, when there occurs a difference in torque between the rotary shaft of the primary sheave and the movable flange of the primary sheave, in response to the difference in torque; and
a secondary-side actuation mechanism for applying a thrust axially of the movable flange of the secondary sheave, when there occurs a difference in torque between the rotary shaft of the secondary sheave and the movable flange of the secondary sheave, in response to the difference in torque.

2. The V-belt continuously variable transmission for a straddle type vehicle according to Claim 1, wherein the primary-side actuation mechanism is disposed between the rotary shaft of the primary sheave and the movable flange of the primary sheave, and the secondary-side actuation mechanism is disposed between the rotary shaft of the secondary sheave and the movable flange of the secondary sheave.

3. The V-belt continuously variable transmission for a straddle type vehicle according to Claim 1, wherein at least one of the primary-side actuation mechanism and the secondary-side actuation mechanism comprises a torque cam assembly composed of a cam groove that is formed on the movable flange side, and a guide pin that is formed on the rotary shaft side and slidably fitted in the cam groove.

4. The V-belt continuously variable transmission for a straddle type vehicle according to Claim 1, wherein during acceleration of the straddle type vehicle, the movable flange of the primary sheave is subjected to a thrust in the direction to narrow the groove width of the primary sheave from the primary-side actuation mechanism.

5. The V-belt continuously variable transmission for a straddle type vehicle according to Claim 1, wherein during rider' s kick-down operation of the straddle type vehicle, the movable flange of the secondary sheave is subjected to a thrust in the direction to narrow the groove width of the secondary sheave from the secondary-side actuation mechanism.

6. The V-belt continuously variable transmission for a straddle type vehicle according to Claim 1, wherein when a torque of the rotary shaft of the primary sheave is larger than a torque of the movable flange of the primary sheave, the movable flange of the primary sheave is subjected to a thrust in the direction to narrow the groove width of the primary sheave from the primary-side actuation mechanism.

7. The V-belt continuously variable transmission for a straddle type vehicle according to Claim 1, wherein when a torque of the rotary shaft of the secondary sheave is larger than a torque of the movable flange of the secondary sheave, the movable flange of the secondary sheave is subjected to a thrust in the direction to narrow the groove width of the secondary sheave from the secondary-side actuation mechanism.

8. The V-belt continuously variable transmission for a straddle type vehicle according to Claim 3, wherein a groove angle of the cam groove of at least one of the primary-side actuation mechanism and the secondary-side actuation mechanism is made in a manner to apply a thrust depending on shift ranges.

9. A straddle type vehicle incorporating the belt continuously variable transmission according to any one of Claims 1 to 8.
